Europäisches Patentamt

European Patent Office

Office européen des brevets

(19)

(11) Veröffentlichungsnummer: **0 237 704**

**A2**

(12) **EUROPÄISCHE PATENTANMELDUNG**

(21) Anmeldenummer: **87100304.2**

(22) Anmeldetag: **13.01.87**

(51) Int. Cl.⁴: **C04B 41/88 , B22D 19/02 , C04B 41/90 , F01D 5/28 , F01D 25/00 , F04D 29/02**

(30) Priorität: **13.01.86 DE 3600677**

(43) Veröffentlichungstag der Anmeldung: **23.09.87 Patentblatt 87/39**

(84) Benannte Vertragsstaaten: **AT BE CH DE ES FR GB GR IT LI LU NL SE**

(71) Anmelder: **RHEINHÜTTE vorm. Ludwig Beck GmbH & Co. Rheingaustrasse 96-100 Postfach 129163 D-6200 Wiesbaden-Biebrich(DE)**

(72) Erfinder: **Auchter, Bruno Fontanestrasse 23 D-6500 Mainz(DE)** Erfinder: **Wagner, Karl-Heinz Klosterstrasse 22 D-6228 Eltville 5(DE)**

(74) Vertreter: **Mey, Klaus-Peter, Dr.-Ing. Dipl.-Wirt.-Ing. Patentanwälte HEMMERICH-MÜLLER-GROSSE-POLLMEIER-- MEY Aachener Strasse 712 D-5020 Frechen 4(DE)**

(54) **Schichtkörper, insbesondere aus Siliziumcarbid und Nickel.**

(57) Die vorliegende Erfindung bezieht sich auf einen Schichtkörper mit einem Grundkörper aus keramischem Material und der Beschichtung eines metallischen Werkstoffes, wobei der Grundkörper aus einem hochverschleißfesten Keramikmaterial, vorzugsweise aus Siliziumcarbid und die Beschichtung aus Nickel besteht. Problematisch ist bisher die Vereinigung der guten Werkstoffeigenschaften von keramischem Material, insbesondere von Siliziumcarbid mit der guten Be-und Verarbeitbarkeit metallischer Werkstoffe. Mit der Erfindung ist vorgesehen, daß die Beschichtung eine Dicke von etwa 1 -15 mm aufweist. Vorteilhaft können auf diese Weise keramische Materialien erhöhten Betriebsdrücken (z.B. um 20 bar) bei verlängerten Standzeiten ausgesetzt werden. Die Beschichtung besteht zweckmäßigerweise aus Nickel, weil hier auf eine bekannte Technik zurückgegriffen werden kann. Die Beschichtung kann ferner nur in einem Teilbereich des Grundkörpers erfolgen. Beispielsweise kann der Schichtkörper als Pumpenlaufrad (10) ausgebildet sein, wobei die Beschichtung (12) im Bereich der Laufradbefestigung zur Aufnahme der Gewindebohrung (11) dient. Vorgesehen ist auch die Außenbeschichtung von Pumpengehäusen.

FIG. 1

# Schichtkörper, insbesondere aus Siliziumcarbid und Nickel

Die vorliegende Erfindung bezieht sich auf einen Schichtkörper mit einem Grundkörper aus keramischem Material und der Beschichtung eines metallischen Werkstoffes, wobei der Grundkörper aus einem hochverschleißfesten Keramikmaterial, vorzugsweise aus Siliziumcarbid und die Beschichtung aus Nickel besteht.

Durch Korrosion und Verschleiß metallischer Werkstoffe entstehen in vielen Anwendungsbereichen hohe Verluste, das gilt beispielsweise auch für Pumpenlaufräder aus Grauguß, Stahlguß, Stahl, Bronce, Messing, Kupfer etc.. Vielfältige Verfahren und Methoden der Oberflächenveredelung wurden bisher entwickelt und mit Erfolg angewandt, um das Korrosions-und Verschleißverhalten von Werkstücken zu verbessern. Hierzu gehören die Metallauftragsverfahren, deren Ziel es ist, einer Oberfläche mit unbefriedigenden Eigenschaften die besseren Festigkeitseigenschaften, physikalischen oder chemischen Eigenschaften der aufgetragenen Metallschicht zu geben. Bekannt ist bereits das Hartverchromen sowie die verschiedenen Methoden des Metallspritzens. Darüberhinaus sind in zahlreichen Fällen Metallauftragsschweißungen eingesetzt worden. Die Grenzen liegen im Bereich des Korrosionsschutzes und des Festigkeitsverhaltens unter dynamischer Beanspruchung. Eine geringere Haftung aufgespritzter Metallschichten und die oft auftretenden Schwierigkeiten und Kosten bei der spanabhebenden Nacharbeitung zählen zu den Nachteilen dieses Verfahrens.

Für metallische Grundwerkstoffe ist auch das sogenannte Dickvernickeln bekannt. Diese Dickvernickelung kann sowohl auf galvanischem Wege aber auch durch stromlose (chemische) Reaktionen aufgebracht werden. Die galvanische Vernickelung benutzt zur Reduktion der im Nickel-Elektrolyten vorliegenden Nickel-Dioden zu Nickel-Metall den elektrischen Strom, der rückstandsfrei umgesetzt wird. Die so verbrauchten Nickel-Ionen werden durch gleichzeitige Auflösung von eingehängten Nickel-Anoden ebenfalls mit Hilfe des fließenden elektrischen Stromes stetig ergänzt. Im Falle der stromlosen (chemischen) Vernickelung reduzieren die Reaktionspartner in der Badlösung die Nickel-Ionen zum Metall. Der Vorgang wird durch katalytische Effekte eingeleitet und auf die zu vernickelnden Flächen begrenzt. Die verbrauchten Nickel-Ionen und weiteren chemischen Reaktionspartner werden der Badlösung diskontinuierlich oder in größeren Anlagen kontinuierlich zudosiert. Aufgrund dieser völlig unterschiedlichen Abscheidungsvorgänge ist galvanisch abgeschiedenes Nickel in allen seinen Eigenschaften deutlich vom stromlos abgeschiedenem Nickel abzugrenzen. Galvanisch abgeschiedenes Nickel ist bis auf einen sehr geringen Gehalt an basischem Nickeloxiden oder -hydroxiden und Verunreinigungen aus den jeweiligen Nickel-Elektrolyten als Reinnickel anzusehen. Demgegenüber enthält stromlos abgeschiedenes Nickel bis zu 10 % Phosphor oder Bor in Form von Nickelphosphid oder Nickelborid, daß durch Nebenreaktion mit dem Reaktionspartner in den Überzug eingebaut wurde. Beide Werkstoffe, weit verbreitet als "galvanisch Nickel" und "stromlos oder chemisch Nickel" bezeichnet, haben deshalb auch völlig unterschiedliche Festigkeitseigenschaften.

Keramik ist ein Werkstoff, der besonders bei extremen Anforderungen (Temperatur, Verschleiß, Korrosion usw.) in den verschiedensten Anwendungsbereichen eingesetzt werden kann. Die Erfahrung hat aber gezeigt, daß in den seltensten Fällen ein vorhandenes metallisches Bauteil durch ein keramisches Bauteil zu ersetzen ist, ohne konstruktiv oder verbindungstechnisch auf die Besonderheiten keramischer Bauteile einzugehen. Obwohl in vielen technischen Bereichen bereits befriedigende Keramikverbundlösungen vorhanden sind, ist es immer noch eine wichtige Aufgabe, Fügeverbindungen mit Keramikbauteilen weiter zu entwickeln.

Insbesondere der keramische Werkstoff Siliziumcarbid ist ein relativ oxidationsbeständiger und hoch verschleißfester Hartwerkstoff mit sehr gutem Wärmeleitvermögen. Die Herstellung erfolgt durch Elektroschmelzen von Kohle und Quarz. Zunehmend wird dieser Werkstoff bei stark auf Verschleiß beanspruchten Teilen, wie beispielsweise Laufrädern von Pumpen oder Spiralgehäusen, Turbinenschaufeln etc. eingesetzt. Das Problem besteht zumeist darin, wie bei keramischen Werkstoffen im allgemeinen, einen geeigneten Paßsitz vorzusehen, der die unterschiedlichen Dehnungseigenschaften von Siliziumcarbid und dem Trägermaterial miteinander vereinbart. Darüberhinaus ist speziell Siliziumcarbid nicht nur ein sehr teures sondern auch ein sehr empfindliches Material, d.h. es ist sehr spröde und daher empfindlich gegen das Auftreten von Kerbspannungen. Bei der Herstellung und bei unsachgemäßer Behandlung muß daher mit einer erhöhten Ausschußquote gerechnet werden.

Aus der EU -Patentanmeldung 0 152 951 sind gattungsgleiche Werkstücke mit sehr dünnen Beschichtungen bis zu maximal 2 μm Dicke bekannt. Diese dünnen Metallfilme werden auf das Werkstück aufgedampft und anschließend wärmebehandelt. Derartig dünne Metallfilme können aber nicht bewirken, daß ein so beschichteter Keramikkörper eine wesentlich höhere Standfestigkeit bei mechanischer und dynamischer Beanspruchung erhält. Eine mechanische Bearbeitung dieser dünnen Filme, beispielsweise durch Spanabhebung, ist nicht möglich. Zudem ist die Art der Beschichtung neben der ebenfalls erforderlichen Wärmebehandlung sehr kostenaufwendig.

Es ist daher die Aufgabe der vorliegenden Erfindung, einen Schichtkörper vorzustellen sowie ein Verfahren zu dessen Herstellung aufzuzeigen, wobei die guten Werkstoffeigenschaften von keramischem Material, insbesondere von Siliziumcarbid mit der guten Be-und Verarbeitbarkeit metallischer Werkstoffe in geeigneter Weise kombiniert wird. Der Schichtkörper soll im wesentlichen leichter und kostengünstiger be-und verarbeitbar sein als der reine hochverschleißfeste Grundwerkstoff. Die Standfestigkeit und Belastbarkeit im Einsatz soll erhöht werden.

Die Lösung dieser gestellten Aufgabe gelingt erfindungsgemäß dadurch, daß die Beschichtung eine Dicke von etwa 1 -15 mm aufweist. Vorteilhaft können auf diese Weise keramische Materialien erhöhten Betriebsdrücken (z.B. um 20 bar) ausgesetzt werden. Ferner wird die Handhabung erleichtert, indem der Transport und Einbau, beispielsweise von innen und außen beschichteten Gleitringen, wesentlich sicherer erfolgen kann. Ein Abplatzen der Kanten beim unsachgemäßen Transport und Einbau wird auf diese Weise vermieden. Darüberhinaus können die Schichtkörper nach der Erfindung einfach miteinander oder mit anderen Körpern verbunden werden, beispielsweise durch Schweißen oder Löten etc.. Auch die Standzeit des hochverschleißfesten Keramikmaterials verlängert sich vorteilhaft, da beim Betrieb auftretende Risse nicht unmittelbar zum Totalausfall führen, weil die Metallbeschichtung das gerissene Keramikmaterial weiterhin zusammenhält. Beim Grundwerkstoff kann es sich beispielsweise auch sowohl um infiltriertes Siliciumcarbid (SiC + Si), als auch um um drucklos gesintertes Siliciumcarbid (SiC) handeln. Ferner können aber auch Siliciumnitrid ($Si_3N_4$), teilstabilisiertes Zirkonoxid ($ZrO_2$) oder Aluminiumtitanat ($Al_2TiO_5$) eingesetzt werden. Durch die Beschichtung aus Nickel können vorteilhaft die langjährigen Erfahrungen, die mit der Dickschichtvernickelung metallischer Bauteile gewonnen wurden, d. h. insbesondere bei Zylinderbüchsen und -bohrungen, Diffusoren, Turbogehäusen, etc. vorteilhaft genutzt werden. Eine Schichtdicke im Bereich von 1 -15 mm wird allen Anforderungen gerecht, beispielsweise um mittels spanabhebender Formgebung ein Gewinde einzuschneiden.

Eine weitere vorteilhafte Ausgestaltung der Erfindung sieht vor, daß nur ein Teilbereich des Grundkörpers beschichtet ist, wodurch Kosten eingespart werden.

In weiterer Ausgestaltung der Erfindung ist vorgesehen, daß zusätzlich eine Beschichtung mit Chrom vorgesehen ist. Falls erforderlich können so besonders hohe Festigkeitswerte mit einer verhältnismäßig dünnen Chromschicht erzielt werden.

In einer besonderen Ausführungsform nach der Erfindung kann der Schichtkörper mit Vorteil als Pumpenlaufrad ausgebildet sein, wobei die Beschichtung im Bereich der Laufradbefestigung zur Aufnahme einer Gewindebohrung dient. Das ansonsten aus Siliciumcarbid bestehende Laufrad besitzt optimale Verschleißeigenschaften und läßt sich dennoch auf eine einfache und kostensparende Weise sicher und ohne besondere Zentrierung an die Antriebswelle ankuppeln.

In einer weiteren Ausgestaltung der Erfindung ist der Schichtkörper als Pumpengehäuse mit Außenbeschichtung ausgebildet. Eine vorzeitige Zerstörung des sehr druckempfindlichen und gegebenenfalls unter erhöhtem Innendruck stehenden SiC-Gehäuses wird durch den Schläge und Stöße absorbierenden Schutzmantel vorteilhaft vermieden.

Ferner ist mit Vorteil vorgesehen, daß der Schichtkörper als Turbinenschaufel ausgebildet ist, wobei die Beschichtung im Bereich des Paßsitzes angebracht ist. Auf diese Weise kann vorteilhaft eine Spitzenpressung im sehr empfindlichen Schaufelmaterial vermieden werden.

Eine andere Weiterbildung der Erfindung sieht mit Vorteil vor, daß er in einen anderen Werkstoff, vorzugsweise in einen metallischen Werkstoff eingebettet ist. Auf diese Weise kann beispielsweise die Zunge eines Pumpengehauses verschleißfest ausgebildet werden.

Für das Verfahren zur Herstellung des Schichtkörpers wird die Aufgabe der Erfindung dadurch gelöst, daß die Beschichtung galvanisch erfolgt. Die galvanische Dickvernickelung haftet fest auf dem Grundwerkstoff und verbessert die Materialeigenschaften optimal. Kleinere Risse im Grundmaterial können auf diese Weise kaum die Qualität des gesamten Werkstückes negativ beeinflussen. Siliciumcarbid eignet sich besonders deshalb zum galvanischen Dickvernickeln, da es elektrisch leitend ist.

Mit Vorteil wird der beschichtete Grundkörper als Armierung für zu giessende Verschleißteile verwendet. Da sich Siliciumcarbid beim Vergießen mit Stahl oder Grauguß im Gußmaterial auflöst, kann die Nickelbeschichtung die Auflösung bis zur Erstarrung verhindern. Auf diese Weise kann das hochverschleißfeste Material (SiC) am gewünschten Einsatzort gezielt platziert werden.

In einer weiteren Ausgestaltung der Erfindung ist vorgesehen, daß als Grundkörper allseitig beschichtete Platten kleiner Abmessung verwendet werden, die in mosaikartigem Verbund in eine Gießform eingelegt und eingeschmolzen werden. Besonders vorteilhaft können auf diese Weise polygone oder quadratische Grundkörper mit Abmessungen von in etwa 20 $\times$ 20 mm, einer Dicke von etwa 5 - 8 mm und mit einer allseitigen Nickelbeschichtung von etwa 1,5 -2 mm eingesetzt werden. Diese Grundkörper können auch eine gekrümmte Oberfläche aufweisen. Verwendung findet diese Verfahrensweise insbesondere bei der Herstellung großer Verschleißteile mit beliebigen unregelmäßigen Formen bzw. Krümmungen, die ansonsten nur schwierig direkt beschichtet werden können, beispielsweise handelt es sich dabei um Spiralgehäuse von Pumpen.

Weitere Einzelheiten, Merkmale und Vorteile der Erfindung ergeben sich aus der nachstehenden Erläuterung der in den Zeichnungen schematisch dargestellten Ausführungsbeispiele.

Es zeigen:

Fig. 1 Pumpenlaufrad aus Siliciumcarbid mit Nickelbeschichtung im Längsschnitt

Fig. 2 Wellenhülse mit Nickelbeschichtung im Längsschnitt

Fig. 3 Wärmetauscherrohr mit Außenbeschichtung, angeschweißt an eine Haltevorrichtung in Querschnittsdarstellung

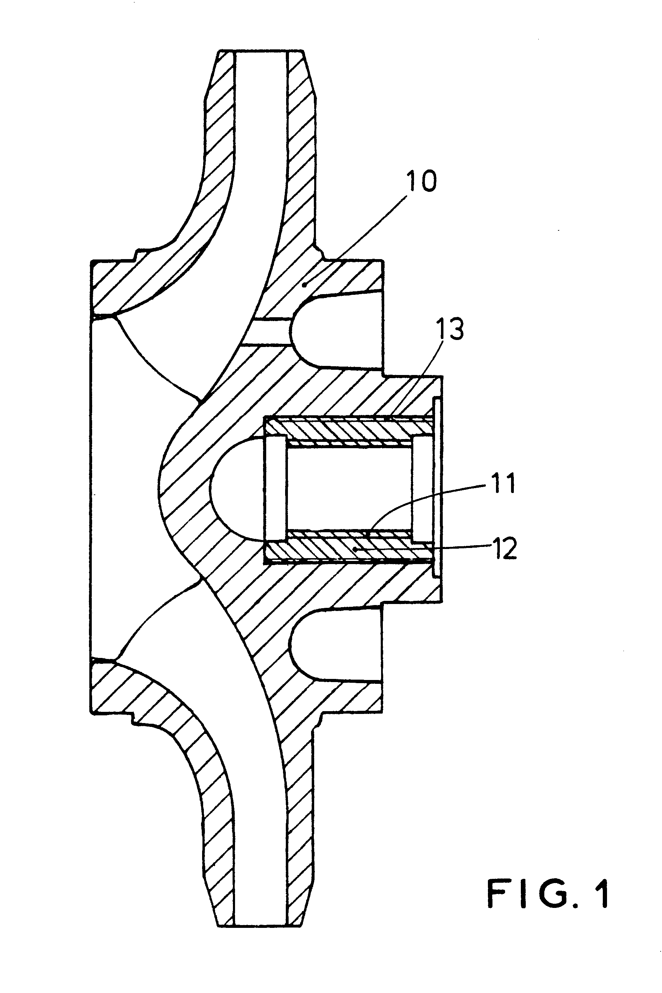

Der erfindungsgemässe Schichtkörper nach Figur 1 zeigt als Grundkörper ein Pumpenlaufrad - (10) aus Siliziumcarbid, das mit der Antriebswelle - (nicht dargestellt) über ein Gewinde (11) verbindbar ist. Das Gewinde (11) wurde in die Gewindebuchse (12) geschnitten, die als Dickschichtvernickelung auf das im Laufrad (10) eingegossene Rundgewinde (13) galvanisch aufgebracht wurde.

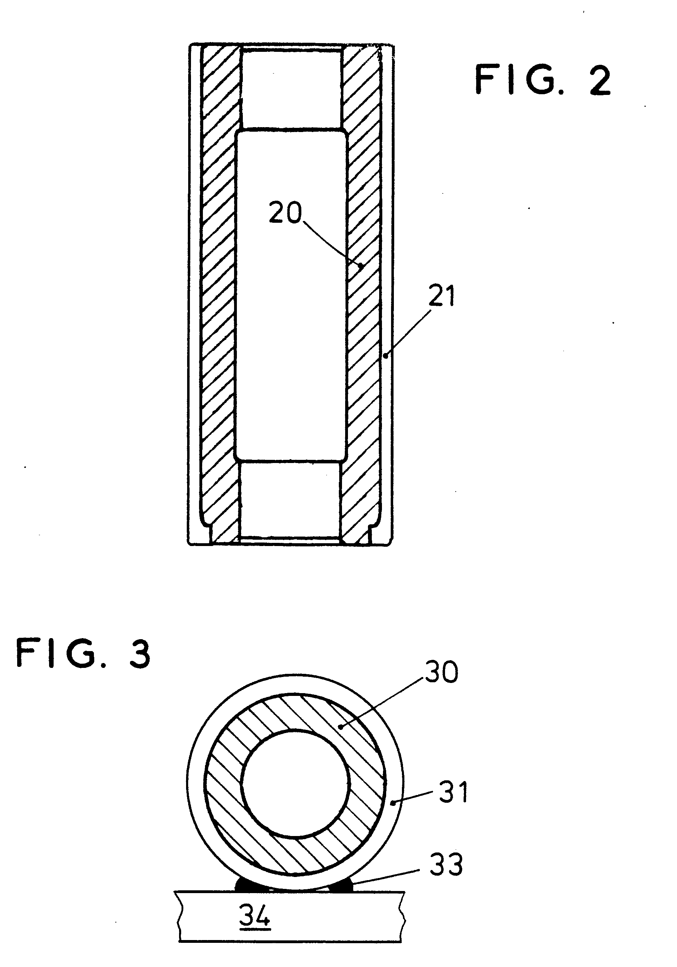

Gemäß Figur 2 kann beispielsweise auch eine Wellenhülse (20) aus Siliziumcarbid mit einer Nickelbeschichtung (21) versehen sein, um auf diese Weise die Bruchanfälligkeit zu vermindern und die Paßgenauigkeit beliebig zu erhöhen. Die Bearbeitungskosten können gesenkt werden, da ansonsten die Bearbeitung von Siliziumcarbid sehr kostenintensiv nur mit Diamantwerkzeugen möglich ist.

Figur 3 zeigt schließlich ein Warmetauscherrohr (30), das mit einer Außenschicht (31) aus Nickel versehen ist. Die Außenbeschichtung (31) ermöglicht dabei die Schweiß-oder Lötverbindung - (33) mit beispielsweise einem beliebigen Träger - (34).

Die erfindungsgemäßen Maßnahmen sind nicht auf die in den Zeichnungsfiguren dargestellten Ausführungsbeispiele beschränkt. So können beispielsweise, ohne den Rahmen der Erfindung zu verlassen, sonstige Armaturen, Ventilgehäuse, Spiralgehäuse, Druckrohre, Gleitringe etc. nach der Erfindung für ihre jeweiligen Einsatzzwecke von innen und/oder außen, ganz oder nur teilweise beschichtet werden.

## Ansprüche

1. Schichtkörper mit einem Grundkörper aus keramischem Material und der Beschichtung eines metallischen Werkstoffes, wobei der Grundkörper aus einem hochverschleißfesten Keramikmaterial, vorzugsweise aus Siliziumcarbid und die Beschichtung aus Nickel besteht, dadurch gekennzeichnet, daß die Beschichtung eine Dicke von etwa 1 -15 mm aufweist.

2. Schichtkörper nach Anspruch 1, dadurch gekennzeichnet, daß nur ein Teilbereich des Grundkörpers beschichtet ist.

3. Schichtkörper nach Anspruch 1 oder 2, dadurch gekennzeichnet, daß zusätzlich eine Beschichtung mit Chrom vorgesehen ist.

4. Schichtkörper nach einem der Ansprüche 1 bis 3, dadurch gekennzeichnet, daß der Schichtkörper als Pumpenlaufrad (10) ausgebildet ist, wobei die Beschichtung (12) im Bereich der Laufradbefestigung zur Aufnahme der Gewindebohrung (11) dient.

5. Schichtkörper nach einem der Ansprüche 1 bis 4, dadurch gekennzeichnet, daß er als Pumpengehäuse mit Außenbeschichtung ausgebildet ist.

6. Schichtkörper nach einem der Ansprüche 1 bis 3, dadurch gekennzeichnet, daß der Schichtkörper als Turbinenschaufel ausgebildet ist, wobei die Beschichtung im Bereich des Paßsitzes angebracht ist.

7. Schichtkörper nach einem der Ansprüche 1 bis 6, dadurch gekennzeichnet, daß er in einen anderen Werkstoff, vorzugsweise in einen metallischen Werkstoff eingebettet ist.

8. Verfahren zur Herstellung eines Schichtkörpers mit einem Grundkörper aus keramischem Material und der Beschichtung eines metallischen Werkstoffes, nach einem der vorhergehenden Ansprüche, dadurch gekennzeichnet, daß die Beschichtung galvanisch erfolgt.

9. Verfahren nach Anspruch 8, dadurch gekennzeichnet, daß der beschichtete Grundkörper als Armierung für zu gießende Verschleißteile verwendet wird.

10. Verfahren nach Anspruch 9, dadurch gekennzeichnet , daß als Grundkörper allseitig beschichtete Platten kleiner Abmessung verwendet werden, die in mosaikartigem Verbund in eine Gießform eingelegt und eingeschmolzen werden.

FIG. 1

# FIG. 2

# FIG. 3